# EUROPEAN PATENT APPLICATION

(11) **EP 1 637 482 A1**
(43) Date of publication of application: **22.03.2006**
(21) Application number: 04022136.8
(22) Date of filing: 17.09.2004
(51) Int. Cl.: B65G 45/02, B65G 51/03

(54) **Transport system with lubricated slideway**

(71) Applicant: Turck, Pieter CHP bvba, 9100 Sint-Niklaas (BE)
(72) Inventor: Turck, Pieter CHP bvba, 9100 Sint-Niklaas (BE)

(57) **Abstract**

Transport system comprising, on the one hand, at least one slideway (2) consisting of two parallel guide bars (3) that are positioned at a mutual distance, whereby an object (5) to be transported can be hung in between said guide bars (3), and, on the other hand, driving means situated along said slideway (2) to slide said object (5) over said guide bars (3), whereby said transport system (1) further comprises means for reducing the friction between said slideway (2) and said object (5) during the transport of said object (5).

## Description

The present invention relates to a transport system, particularly a transport system comprising a slideway and driving means, whereby objects to be transported are hung in said slideway and are driven in a transport direction by said driving means.

Such transport systems are known, comprising a slideway consisting of at least two guide bars extending parallel to each other on a mutual distance and of driving means such as fans positioned along said slideway.

The above known transport system is mainly used for transporting vessels or the like consisting of a vessel body and a bottleneck that is provided with a collar projecting thereof, which vessel is hung with said collar in between two of said guide bars and is transported over said guide bars by means of an air jet that is created by said fans.

An inconvenience of said known transport system is that the vessels are likely to get jammed during transport, especially at curves in the slideway, whereupon a manual interaction is necessary.

Another inconvenience is that there is a relative high mutual friction between the collar projecting from the bottleneck of said vessels and the guide bars of the slideway.

Said relative high friction results in a significant loss of energy during the transport of said vessels and therefore the need for a relatively large number of fans or relatively high power fans along the slideway.

The present invention seeks to provide a solution for one or several of the above-mentioned inconveniences.

Hereto the present invention concerns a transport system comprising, on the one hand, at least one slideway consisting of two parallel guide bars that are positioned at a mutual distance, whereby an object to be transported can be hung in between said guide bars, and, on the other hand, driving means situated along said slideway to slide said object over said guide bars, whereby said transport system further comprises means for reducing the friction between said slideway and said object during the transport of said object.

An advantage of a transport system according to the present invention is that objects can be transported smoothly over said slideway with only a low risk of getting jammed.

Another advantage of a transport system according to the present invention is that the friction between said guide bars and said object is lower than in a known transport system, thereby reducing the energy losses during transport and thus allowing a reduction of the energy consumption of said driving means.

In order to better explain the characteristics of the present invention, some preferred embodiments of a transport system according to the invention will be described as an example without being limitative in any way, with reference to the accompanying drawings, in which:
figure 1 schematically represents a transport system according to the invention;
figure 2 represents, on a larger scale, a cross-section according to line II-II in figure 1;
figure 3 represents a variant of figure 2.

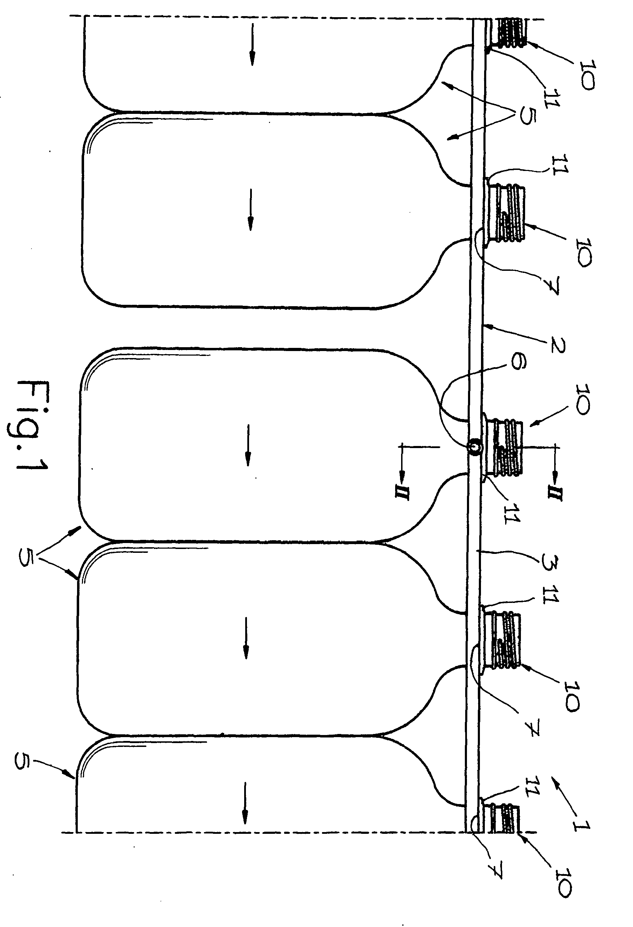

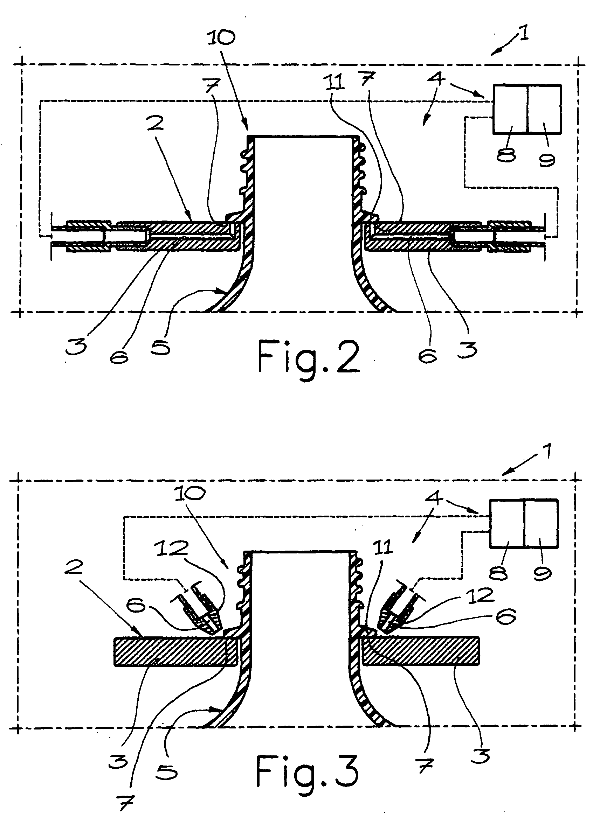

As represented in figures 1 and 2 a transport system 1 according to the invention comprises, on the one hand, a slideway 2 consisting of two parallel guide bars 3 that are positioned on a distance of each other and, on the other hand, driving means such as fans or the like, which are not represented in the drawings.

According to the invention the transport system 1 is further provided with means 4 for reducing the friction between an object to be transported and said slideway 2 in which said object 5 is to be hung for the transport thereof.

In this case, at least one of said guide bars 3 is provided with at least one channel 6 having an inlet and a discharge which is located at a contact surface 7 between the concerning guide bar 3 and said object 5.

Said means for reducing the friction between said slideway 2 and said object 5 during the transport thereof consist in the present embodiment of a dispensing device 8 that is connected to the inlet of said channel 6.

Said dispensing device 8 preferably is a so-called micro-dispenser for a fluidum such as a lubricant and may be connected to a control unity 9 for controlling the amount of lubricant to be dispensed.

The working of a transport system according to the invention is easy and as follows.

Objects, in particular vessels 5 containing a bottleneck 10 with a collar 11 projecting thereof are hung in between the guide bars 3 of said slideway 2, such that said collar 11 rests on said guide bars 3.

The contact surface 7 between said guide bars 3 and one of said vessels 5 can hereby be defined as the part of said guide bars 3 whereupon said collar 11 rests.

In order to transport said vessels 5, driving means such as fans are provided, which create an air jet pushing the vessels 5 in the desired transport direction over the slideway 2.

During this transport, said lubricant is provided at the discharge of said channels 6, whereby it is spread out over the concerning guide bar 3 by the first vessel 5 sliding over said discharge, thereby forming a film of lubricant on the concerning guide bar 3 and reducing the friction between said collar 11 and said guide bar 3.

It is clear that no lubricant will have to be provided for a number of subsequent vessels 5 sliding over said slideway 2, as said film of lubricant will also facilitate their transport over the slideway 2.

After the transport of a number of vessels 5 however, the film of lubricant will loose its effect and a new film will have to be created by reactivating the dispensing device 8 so that a new amount of lubricant is provided at the discharge of said channel 6.

It is clear that according to the characteristics of the lubricant several channels 6 and dispensing devices 8 positioned at mutual distances along the slideway 2 may be needed to provide a film over the entire length of said slideway 2.

Figure 3 represents a variant according to the invention, whereby one or more of said dispensing devices 8 are each connected to at least one nozzle 12 that is provided along said slideway 2 and that is oriented towards the contact surface 7 of the concerning guide bar 3.

According to this variant an amount of lubricant is provided on the contact surface 7 of said guide bars 3, which lubricant will subsequently been spread over the guide bars 3 by the first vessel 5 sliding over it.

It is remarked that said fluidum may also be a air/lubricant mixture.

The present invention is by no means restricted to the embodiments described above and represented in the drawings, on the contrary, a transport system according to the invention can be made in all sorts of variants while still remaining within the scope of the invention.

## Claims

1. Transport system comprising, on the one hand, at least one slideway (2) consisting of two parallel guide bars (3) that are positioned at a mutual distance, whereby an object (5) to be transported can be hung in between said guide bars (3), and, on the other hand, driving means situated along said slideway (2) to slide said object (5) over said guide bars (3), whereby said transport system (1) further comprises means for reducing the friction between said slideway (2) and said object (5) during the transport of said object (5).

2. Transport system according to claim 1, **characterized in that** said means for reducing the friction between said slideway (2) and said object (5) during the transport thereof, consist of at least one dispensing device (8) for a fluidum, which dispensing device (8) is connected to means for providing said lubricant on a contact surface (7) between one of said guide bars (3) and said object (5).

3. Transport system according to claim 2, **characterized in that** the means for providing said lubricant consist of at least one channel (6) provided in one or both of said guide bars (3), said channel (6) having an inlet connected to the outlet of said dispensing device (8) and a discharge located at said contact surface (7).

4. Transport system according to claim 2, **characterized in that** said means for providing said lubricant consist of at least one nozzle (12) positioned along said slideway (2) and oriented towards said contact surface (7).

5. Transport system according to claim 2, **characterized in that** said fluidum is a lubricant.

6. Transport system according to claim 2, **characterized in that** said fluidum is an air/lubricant mixture.

7. Transport system according to claim 5 or 6, **characterized in that** said lubricant is acceptable for food applications.
